# EUROPÄISCHE PATENTSCHRIFT

(11) **EP 1 117 037 B1**
(45) Veröffentlichungstag und Bekanntmachung des Hinweises auf die Patenterteilung: **20.02.2008**
(21) Anmeldenummer: 00127959.5
(22) Anmeldetag: 21.12.2000
(51) Int. Cl.: G06F 9/46, G06F 9/38

(54) **Datenverarbeitungsvorrichtung zum parallelen Verarbeiten von unabhängigen Prozessen (Threads)**
Data processing apparatus for parallel processing of independent processes (threads)
Appareil de traitement de données pour le traitement parallèle de processus indépendants (threads)

(30) Priorität: 12.01.2000 DE 10000960
(43) Veröffentlichungstag der Anmeldung: 18.07.2001
(73) Patentinhaber: Infineon Technologies AG, 81669 München (DE)
(72) Erfinder: Nie, Xiaoning, 81543 München (DE)
(74) Vertreter: Reinhard - Skuhra - Weise & Partner

(56) Entgegenhaltungen:
- WO-A-99/31580
- STEVEN WALACE, BRAD CALDER, DEAN M. TULSSEN: "Threaded multiple path execution" 1998 IEEE, [Online] 1998, XP002322675 UNIVERSITY OF CALIFORNIA, SAN DIEGO Gefunden im Internet: URL:http://csdl.computer.org/comp/proceedi ngs/isca/1998/8491/00/84910238abs.htm> [gefunden am 2005-03-22]
- QUINN JACOBSON, STEVE BENNET: "Control flow speculation in multiscalar processors" 1997 IEEE,, [Online] 1. Februar 1997 (1997-02-01), Seiten 1-13, XP002322676 Gefunden im Internet: URL:http://meseec.ce.rit.edu/eecc722-fall2 001/papers/branch-prediction/8/task_pred.p df> [gefunden am 2005-03-16]

## Beschreibung

Die Erfindung betrifft eine Datenverarbeitungsvorrichtung zum parallelen Verarbeiten von mindestens zwei unabhängigen Prozessen (Threads), gemäß dem Oberbegriff von Anspruch 1 wie auch aus der US 5, 574, 939 bekannt.

Aus der US'A'5,941,983 ist eine Datenverarbeitungsvorrichtung zum parallelen Verarbeiten unabhängiger Prozesse mit einem Programmspeicher bekannt, in dem ein kompiliertes Programm mit einer Vielzahl unabhängiger Prozesse (Threads) abgelegt ist, wobei das kompilierte Programm Informationen über Parallelität und eine Vielzahl von Bündeln mit mehreren Befehlen eines Prozesses aufweist.

Aus der WO 99/21088 A1 ist eine Datenverarbeitungsvorrichtung zum parallelen Verabreiten von Prozessen (Threads) mit einer Thread-Umschaltlogik bekann, die Register zum Speichern von Flags und Daten aufweist.

Aus der US'A'5,404,469 ist eine Datenverarbeitungsvorrichtung (Multi-Threaded-Mikroprozessor) bekannt, welche sich einer statischen Verschachtelungstechnik bedient.

Der Durchsatz und die Geschwindigkeit einer Datenverarbeitungsvorrichtung bzw. eines Prozessors kann bekanntermaßen durch Pipelining und eine Erhöhung der Taktfrequenz gesteigert werden.

Durch eine Erhöhung des Hardwareaufwandes, d.h. eine Vervielfachung von Einheiten des Prozessors, kann ebenfalls die Datenverarbeitungsrate gesteigert werden. Hierzu sind im wesentlichen zwei Konzepte bekannt, nämlich Multiprozessor-Architektur und Parallelismus auf der Befehlsebene des Prozessors (ILP = Instrucktion Level Parallelism) Heutzutage hat sich ILP als Konzept zum parallelen Verarbeiten weitgehend durchgesetzt. Die Multiprozessor-Architektur ist dagegen aufgrund der komplizierten Interprozessor-Kommunikation weniger erfolgreich.

Ein Beispiel für das ILP-Konzept ist die VLIW (Very Large Instruction Word)-Architektur der digitalen Signalprozessoren der C6x-Baureihe der Firma Texas Instruments. Auch die neue IA-64-Architektur der Firmen Intel und Hewlett-Packard basiert auf dem ILP-Konzept. In den beiden vorgenannten Architekturen wird Parallelismus während des Übersetzens des Programmkodes festgestellt. Intel bezeichnet ihre IA-64-Architektur als "Explicit Parallel Instruction Computing" (EPIC). Beim Übersetzen werden einige vorbestimmte Flags zum Erkennen der Parallelität gesetzt. Dadurch kann der Prozessor einfach feststellen, wann parallel auszuführende Instruktionen im Programmfluß auftreten und entsprechend reagieren. Ferner ist dies billiger als beispielsweise eine doppelt vorhandenen Hardware wie bei einem vollständigen Parallelismus, der in den superskalaren Architekturen der PowerPC-Prozessoren eingesetzt wird. Dort wird erst während der Programmlaufzeit ein Parallelismus festgestellt, auf den dann entsprechend reagiert wird. Der Gewinn aufgrund von ILP ist allerdings durch die inhärenten Abhängigkeiten der Daten- und Steueroperationen begrenzt. Zur Vermeidung solcher Abhängigkeiten sind aufwendige Vorarbeiten - beispielsweise eine Berücksichtigung von Daten- und Steueroperationsabhängigkeiten bereits beim Programmieren - erforderlich, die wiederum den gesamten Entwicklungsprozeß verteuern.

In dem Aufsatz "Simultaneous Multithreading: Maximizing On-Chip Parallelism" von D.M. Tullsen, S.J. Eggers, H.M. Levy, veröffentlicht auf den Proceedings of 22nd Annular Int. Symposium for Computer Architectures, 1995 wird zur Maximierung des Parallelismus auf Chipebene das Konzept des Simultaneous Multithreading vorgeschlagen. Hierzu werden mehrere unabhängige Prozesse, Befehlsfolgen oder Programmflüsse (Threads) an die mehrfach vorhandenen Einheiten eines superskalaren Prozessors in einem Taktzyklus ausgegeben. Ziel des Simultaneous Multithreading ist es, unter Ausnutzung von Parallelismus alle Einheiten eines Prozessors gleichzeitig auszulasten und dadurch unter anderem den Einfluß hoher Latenzzeiten, die durch einen langsamen Speicher verursacht werden, auf die Prozessor-Performance zu verringern.

Ein Single-Chip-Multiprocessor ist in dem Aufsatz "A single-chip Multiprocessor" von L.Hammond, B.A. Nayfeh, K. Olukotun beschrieben, der 1997 in IEEE-Computer auf den Seiten 79 bis 85 veröffentlicht wurde. In diesem Aufsatz wird insbesondere auf die Unterschiede zwischen Simultaneous-Multithreading (SM) und Chip-Multiprocessors (CMP) hinsichtlich der Performance eingegangen. Ferner wird vorgeschlagen, aufgrund der schnell wachsenden Integrationsdichte von integrierten Schaltungen eine Multiprozessor-Architektur zum Verarbeiten paralleler Prozesse zu verwenden.

Aufgabe der Erfindung ist es, eine Datenverarbeitungsvorrichtung bzw. einen Prozessor vorzuschlagen, die bzw. der mindestens zwei Prozesse (Threads) parallel ausführen kann, wobei der Hardware-Aufwand verhältnismäßig gering ist.

Diese Aufgabe wird durch eine Datenverarbeitungsvorrichtung mit den Merkmalen von Patentanspruch 1 gelöst. Bevorzugte Ausführungsformen sind den abhängigen Patentansprüchen entnehmbar.

Eine solche Datenverarbeitungsvorrichtung kann beispielsweise in Telekommunikationsanwendungen als Netzwerkprozessor zur Behandlung der Schicht 1 bis 3 des Protokollstapels von LAN-Anwendungen, in ATM (Asynchronous Transfer Mode)-Schaltern, in IP (Internet Protocol)-Routern, in Frame-Relays, die insbesondere auf DSL (Digital Subscriber Line)-Verfahren, Ethernet und Kabel-Modem basieren, vorteilhaft eingesetzt. Insbesondere bei den vorgenannten Anwendungen treten häufig unabhängige Prozesse zur Verarbeitung verschiedener Aufgaben, beispielsweise verschiedener Protokolle, auf. Solche, als Multiple Threads bezeichnete, parallel ablaufende Prozesse sind im Telekommunikationsbereich als grundlegende Anwendungen entsprechend weit verbreitet. In einer programmierbaren IP/ATM-Schnittstelle (Internet Protocol/Asynchronous Transfer Mode-Input/Output-Processing-Unit) laufen beispielsweise unabhängige Prozesse zur Steuerung verschiedener Datenverbindungen oder zum Steuern getrennter Datenschiebeoperationen.

Der Einsatz der erfindungsgemäßen Datenverarbeitungsvorrichtung ist aber nicht auf die vorgenannten Anwendungen beschränkt, sondern kann überall, wo parallele Prozesse auftreten, eingesetzt werden. Beispiele hierzu sind Steuer- und Regelaufgaben oder auch ganz allgemein in Computern, die im Büro oder privat genutzt werden. Sinnvoll ist der Einsatz gerade dann, wenn allgemein Prozesse parallel mit hoher Performance abgearbeitet werden müssen.

Die Erfindung betrifft eine Datenverarbeitungsvorrichtung zum parallelen Verarbeiten von mindestens zwei unabhängigen Prozessen (Threads) mit
- einem Programmspeicher, in dem mindestens ein kompiliertes Programm mit einer Vielzahl N unabhängiger Prozesse abgelegt ist, wobei das kompilierte Programm Informationen über Parallelität und eine Vielzahl von Bündeln mit mehreren Befehlen eines Prozesses aufweist;
- einer Verzweigungssteuereinheit, die den Programmspeicher adressiert;
- Register zum Speichern von Flags und Daten, die in Abhängigkeit vom ausgeführten Prozeß umgeschaltet werden; und
- einer Programmflußsteuereinheit, das das Holen von Bündeln aus dem Programmspeicher und die Verzweigungssteuereinheit und das Ausgeben von Befehlen in Abhängigkeit von in den Befehlen enthaltenen und zur Kompilierzeit des Programms eingebauten Informationen steuert.

Die grundlegende Idee der Erfindung liegt darin, daß die Abhängigkeiten von Daten und Befehlen in unabhängigen, parallel laufenden Prozessen geringer sind als in einem einzelnen Programmfluß (Single Sequential Program Flow) zur Parallelverarbeitung. Beim Übersetzen bzw. Kompilieren eines Programmes in Maschinenkode wird das Programm auf Parallelität untersucht und mit besonderen Flags bzw. Informationen zur Kennzeichnung für Parallelität versehen.

Die Architektur der Datenverarbeitungsvorrichtung ist hierzu kompatibel zu einer Einzelprogramm-Architektur (Single Thread Architecture). Die parallel auszuführenden Befehle werden in einem Taktzyklus aus einem Programmspeicher geholt. Jedem einzelnen parallelen Prozeß wird eine Priorität zugewiesen. Nach der Holphase (Fetch-Phase), in der die Datenverarbeitungsvorrichtung über eine Verzweigungssteuereinheit (Branch-Control-Unit) Daten und Befehle aus dem Programmspeicher holt, wird von einer Programmflußsteuereinheit (Flow-Control-Unit) entschieden, welcher Prozeß gemäß der vergebenen Priorität und der bei der Übersetzung gesetzten Flags bzw. eingebauten Informationen über Parallelität zuerst ausgeführt wird.

Die Datenverarbeitungsvorrichtung weist hierzu Register zur Speicherung der Statusvariablen der Parallelprogramme wie beispielsweise Programmzähler (Program-Counter), Registerfiles, ALU (Arithmetic Logic Unit)-Flags, etc. auf. Die Register sind in Abhängigkeit vom zu verarbeitenden Prozeß umschaltbar und dienen im wesentlichen zur Speicherung von Daten des Prozesses (sogenannter Context-Switch).

In einer bevorzugten Ausführungsform der Datenverarbeitungsvorrichtung sind N Befehlspuffer parallel dem Programmspeicher nachgeschaltet und speichern aus diesem ausgelesene Befehle.

Vorzugsweise wird ein Befehlsausgabeselektor von der Programmflußsteuereinheit derart gesteuert, daß dieser Befehle aus den Befehlspuffern ausliest und N Befehle parallel ausgibt.

Für die Parallelverarbeitung können zentrale Einheiten wie Befehlsdekoder (Instruction-Decoder) und Programmzähler in der Verzweigungssteuereinheit entsprechend den aktiven parallelen Prozessen vervielfacht, beispielsweise verdoppelt, werden. Hierzu müssen nicht für jeden parallelen Prozeß zusätzliche Einheiten vorgesehen werden, sondern nur so viele, wie Prozesse gleichzeitig parallel ausgeführt werden sollen. Weist also beispielsweise ein Programm fünf verschiedene parallele Prozesse auf, sind aber immer nur zwei dieser fünf Prozesse aktiv, so genügt eine Verdoppelung der zentralen Einheiten. Im Vergleich zu den aufwendigen ILP-Architekturen wird insgesamt weniger Hardware benötigt. Einen besonderen Aufbau zur Verarbeitung der parallelen Prozesse weisen die Einheiten zum Holen der Befehle (Befehlspuffer und Befehlsausgabeselektor) und zum Verzweigen (Branch-Control-Unit) auf. Die vorgeschlagene Architektur ist sowohl mit als auch ohne Programm- und Daten-Cache nutzbar.

Vorzugsweise sind N Befehlsdekoder zum Dekodieren der ausgegebenen Befehle vorgesehen.

Besonders bevorzugt sind mindestens zwei Befehlsausführungseinheiten zum Ausführen der N dekodierten Befehle vorgesehen.

Vorzugsweise mindestens sind ferner mindestens zwei Busse vorgesehen, welche die N Befehlsausführungseinheiten mit einem Speicher für Daten verbinden.

Die Befehle eines oder mehrerer Bündel(s) sind besonders bevorzugt parallel ausführbar.

Vorzugsweise gibt die Verzweigungssteuereinheit einen Adreßzeiger aus, der ein Bündel adressiert.

Die Verzweigungssteuereinheit weist in einer weiteren bevorzugten Ausführungsform
- einen ersten Multiplexer und einen zweiten Multiplexer,
- einen Addierer und
- N Programmzähler auf, wobei
- von der Programmflußsteuereinheit die Anzahl der Befehle in einem Bündel dem Addierer zugeführt wird, der einen Adreßzeiger und die Anzahl der Befehle addiert,
- Adressen für Programmsprünge oder Funktionsaufrufe und eine Prozeßnummer von der Programflußsteuerung dem ersten Multiplexer zugeführt werden,
- mittels des ersten Multiplexers entweder das Ausgangssignal des Addierers oder die Adressen für Programmsprünge oder Funktionsaufrufe in den dem aktiven Prozeß zugeordneten Programmzähler geschrieben wird bzw. werden,
- über den zweiten Multiplexer, der über die zugeführte Prozeßnummer gesteuert wird, der Inhalt des dem gerade aktiven Prozeß zugeordneten Programmzählers als neuer Adreßzeiger ausgegeben wird.

Der Programmflußsteuereinheit werden bevorzugt über einen Subbus vom Ausgangsbus des Programmspeichers
- mindestens ein Bit zur Indikation der parallelen Ausführung von Befehlen, und/oder
- mindestens ein Bit zur Indikation der Länge des folgenden Befehlsbündel, und/oder
- die Indikation eines oder mehrerer NOPs in den Befehlsbündeln, und/oder
- die Priorität der Prozesse der Befehle
zugeführt.

Ein Prozeß wird vorzugsweise durch Zuweisen einer Prozeßnummer, einer Priorität und einer Speicheradresse, ab welcher der Prozeß im Programmspeicher abgelegt ist, aufgerufen.

Vorzugsweise dient die Datenverarbeitungsvorrichtung als Netzwerkprozessor zum Verarbeiten von Schicht 1 bis 7 Protokoll-Stapeln in Anwendungen wie LAN, ATM-Schaltern, IP-Routern, Frame-Relays, die auf DSL, Ethernet oder Kabel-Modems basieren. Insbesondere bei diesen Anwendungen ist eine Parallelverarbeitung von wesentlicher Bedeutung, so daß die erfindungsgemäße Datenverarbeitungsvorrichtung hier besonders vorteilhaft eingesetzt werden kann.

Aus der folgenden Beschreibung eines Ausführungsbeispiels der Datenverarbeitungsvorrichtung in Verbindung mit der Zeichnung wird die Funktionsweise der Aufbau verdeutlicht. In der Zeichnung zeigt
Figur 1 ein Blockschaltbild der erfindungsgemäßen Datenverarbeitungsvorrichtung,
Figur 2 ein Blockschaltbild, das detailliert die Verschaltung des Programmspeichers, der Programmflußsteuereineit und des Befehlsausgabeselektors darstellt,
Figur 3 ein Blockschaltbild mit der Verzweigungssteuereinheit,
Figur 4 ein Zustandsdiagramm zur Erklärung der Arbeitsweise der Programmflußsteuereinheit.

Im folgenden wird die Verzweigungssteuereinheit als Branch-Control-Unit, die Programmflußsteuereinheit als Flow-Control-Unit, die Befehlsausführungseinheit als Execution-Unit und der Befehlsausgabeselektor als Instruction-Issue-Selector bezeichnet.

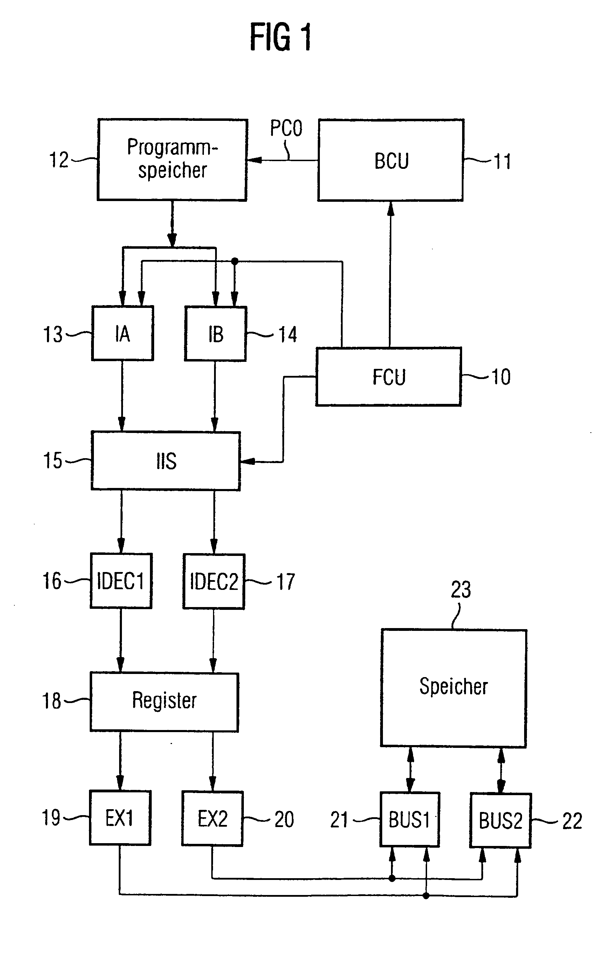

In Figur 1 ist das Blockschaltbild der Datenverarbeitungsvorrichtung zur parallelen Verarbeitung zweier Prozesse bzw. Threads dargestellt. Ein in einem Programmspeicher 12 abgelegtes Programm wird über einen Adreßzeiger PC0 von einer Branch-Control-Unit BCU 11 (Verzweigungssteuereinheit) adressiert. In der BCU 11 sind wenigstens zwei Programmzähler für die verschiedenen Prozesse bzw. Threads vorgesehen. Diese Programmzähler werden den gerade aktiven Prozessen zugewiesen. Abhängig davon, welcher Prozeß gerade läuft, d.h. von der Datenverarbeitungsvorrichtung bearbeitet wird, wird als Adreßzeiger PC0 der Inhalt des entsprechenden Programmzählers herangezogen.

Dem Programmspeicher 12 sind zwei Befehlspuffer IA 13 und IB 14 für die zwei parallel zu verarbeitenden Prozesse nachgeschaltet. Die Befehlspuffer speichern die aus dem Programmspeicher ausgelesenen Befehle.

Eine Flow-Control-Unit 10 (Programmflußsteuereinheit) steuert sowohl die BCU 11 als auch die Befehlspuffer 13 und 14. Den Befehlspuffern 13 und 14 ist ein Instruction-Issue-Selector 15 nachgeschaltet, über den Befehle aus den Befehlspuffern 13 und 14 auf zwei Befehlsdekoder 16 und 17 gemultiplext werden.

Den Befehlsdekodern 16 und 17 sind Register 18 zur Speicherung von Zero- Carry-, Overflow-Flags der parallel laufenden Prozesse vorgesehen. Die Register 18 weisen wenigstens zwei Registerfiles zum Speicher von Daten und von Zuständen der aktiven Prozesse auf.

Dem Register 18 wiederum sind zwei Execution Units EX1 19 und EX2 20 (Befehlsausführungseinheiten) nachgeschaltet. Diese beiden Einheiten dienen zum Ausführen der Befehle. Hierzu sind beide Einheiten EX1 19 und EX2 20 jeweils mit zwei Bussen BUS1 21 und BUS2 22 verbunden, über die auf einen Speicher 23 zugegriffen wird, in dem Daten abgelegt sind. Der Speicher 23 ist vorzugsweise ein Schreib/Lese-Speicher (RAM).

Im folgenden wird die Funktionsweise der oben beschriebenen Anordnung erläutert:

Der Programmkode ist in fester Länge kodiert. Die Programme der Prozesse sind nicht notwendigerweise getrennt, sondern können auch in einem Programm vereint sein. Der Startpunkt eines Prozesses bzw. Threads entspricht einem Sprung, kombiniert mit einer zusätzlichen Funktion zum Setzen einer Prozeß- bzw. Thread-Nummer. Das Format eines solchen Startpunktes lautet wie folgt:

RUN Thread_nr Priority Jump_Adr

Der Prozeß wird also durch den Befehl RUN aufgerufen, wobei noch eine Thread-Nummer Thread_nr, eine Priorität Priority und die Sprungadresse Jump_Adr, an der der Prozeßkode im Programmspeicher steht, angegeben bzw. zugewiesen werden.

Die Befehle sind immer in Bündeln (Bundles) mit einem oder zwei Befehlen gespeichert. Zum Zeitpunkt der Kompilation wird der ILP derart untersucht, daß die Bündel mit Befehlen parallel ausführbar sind. Das bedeutet, daß während der Kompilation des oder der Programme(s) untersucht wird, welche Befehle weitgehend unabhängig voneinander sind und demnach parallel ausführbar sind. Zwei unabhängige Befehle werden dann in ein Bündel "verpackt". Ferner können auch die Befehle verschiedener Bündel parallel ausführbar sein. Es sind somit auf jeden Fall die Befehle eines Bündels parallel ausführbar als auch gegebenenfalls die Befehle verschiedener Bündel bzw. verschiedener Prozesse. Jedes Bündel weist ein Flag auf, das die Länge der folgenden Bündels angibt. In Abhängigkeit von diesem Flag wird der Adreßzeiger berechnet. Bei der Adressierung des Programmspeichers 12 über den Adreßzeiger PC0 weist dieser eine Bitbreite auf, mit der die maximale Länge eines Befehlsbündels adressierbar ist.

Das Holen der Befehle aus dem Programmspeicher (Instruction Fetch) erfolgt folgendermaßen: der Programmspeicher 12 wird durch den Adreßzeiger PC0 adressiert (der Adreßzeiger PC0 zeigt hierzu auf die Anfangsadresse eines Bündels); dann wird ein Befehlsbündel in einen der Befehlspuffer 13 bzw. 14 gelesen. Anschließend wird ein weiteres Befehlsbündel ausgelesen und in den anderen der Befehlspuffer 13 bzw. 14 geschrieben. Das zweite Befehlsbündel gehört dabei zu einem anderen Prozeß als das erste Befehlsbündel. Somit können zwei aktive Prozesse bearbeitet werden. Insgesamt können mehr als zwei Prozesse vorhanden sein, aber der Prozessor kann in diesem Ausführungsbeispiel nur zwei aktive Prozesse parallel ausführen. Durch Vervielfachen der entsprechenden Einheiten Befehlspuffer, Befehlsdekoder und Execution-Unit können auch mehr als zwei Prozesse aktiv sein, d.h. parallel verarbeitet werden. Bei jedem Holzyklus werden jedenfalls zwei Befehlsbündel aus dem Programmspeicher 12 in die Befehlspuffer 13 und 14 übertragen.

Über den Instruction-Issue-Selector 15, der Multiplexer-Logik umfaßt, werden aus den Befehlspuffern 13 und 14 Befehle der Befehlsbündel oder NOPs (No Operations) ausgegeben. Die Befehle oder NOPs werden den Befehlsdekodern 16 und 17 zu Dekodierung zugeführt. Es können entweder zwei Befehle aus einem Befehlsbündel, d.h. zwei Befehle aus dem Befehlspuffer 13 oder 14, oder jeweils ein Befehl aus dem Befehlspuffer 13 und 14 über den Instruction-Issue-Selector 15 ausgewählt werden. Wenn die vom Instruction-Issue-Selector 15 ausgegebenen Befehle NOPs sind, kann der Prozessor in einen Power-Down-Modus gehen.

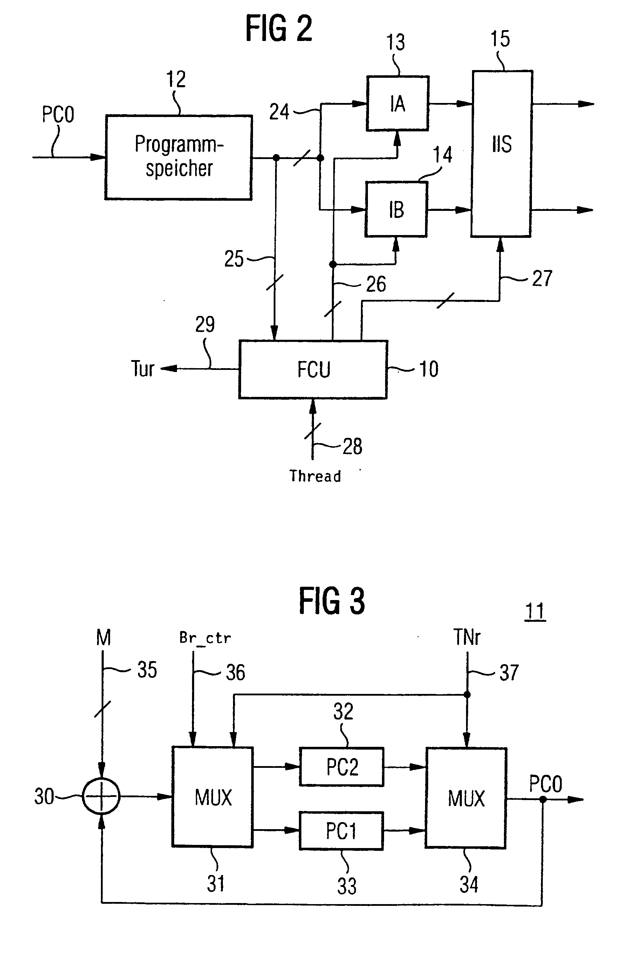

Die Ausgabe und Auswahl der Befehle aus den Befehlspuffern 13 und 14 sowie den Instruction-Issue-Selector 15 wird von der Flow-Control-Unit 10 gesteuert. Dies wird anhand Figur 2 erklärt. Die aus dem Programmspeicher 12 ausgelesenen Befehlsbündel werden über einen Befehlsbus an die Befehlspuffer 13 und 14 geführt. Über einen Befehlssubbus 25 wird folgende Informationen aus dem Befehlsbündel der Flow-Control-Unit 10 zugeführt:
- Ein Bit zur Indikation der parallelen Ausführung von Befehlen oder ein Bit zur Indikation der Länge des folgenden Befehlsbündel. Im Falle von Programmkode mit fester Länge ist allerdings ein Indikation der Länge nicht nötig.
- Die Indikation eines oder mehrerer NOPs in den Befehlsbündeln, wobei ein NOP durch einen anderen Befehl des anderen Prozesses ersetzt werden kann.
- Den aktuelle Prozeß, d.h. die Nummer der Prozesses über einen Thread-Bus 28.
- Die Priorität der beiden Prozesse.

Die Flow-Control-Unit 10 steuert über einen Fetch Ctr-Bus 26 die Befehlspuffer 13 und 14 und über einen Issue Select-Bus 27 den Instruction-Issue-Selector 15 an. Die internen Zustände der Flow-Control-Unit 10 weisen die Anzahl der verbleibenden Befehle in den Befehlspuffer 13 und 14 der beiden Prozesse. An Ausgangssignalen gibt die Flow-Control-Unit 10 folgende aus:
- Ein Signal zur Inkrementierung des Programmzählers. Das Signal ist 0 für ein Befehlsbündel mit einem Befehl und 2 für ein Befehlsbündel mit zwei Befehlen.
- Über den Fetch_Ctr-Bus 26 ein Fetch_Ctr-Signal zum Freigeben der Befehlspuffer 13 und 14.
- Über den Issue_Select-Bus 27 ein Issue_Select-Signal zur Steuerung des Instruction-Issue-Selectors 15.

Die dem Instruction-Issue-Selector 15 nachgeschalteten Befehlsdekoder 16 und 17 dekodieren die zugeführten Befehle. Die Prozeßnummer und die Priorität des jeweiligen Prozesses werden im Register 18 gespeichert.

In Figur 3 ist der Aufbau der Branch-Control-Unit 11 dargestellt. Die Branch-Control-Unit 11 weist einen Addierer 30 auf, der den Adreßzeiger PC0 und ein über einen Instruction-Bundle-Bus 35 zugeführtes Signal M addiert. Das Signal M ist entweder 1 für ein Befehlsbündel mit einem Befehl oder 2 mit einem Befehlsbündel mit zwei Befehlen. Dadurch wird der aktuelle Programmzählerwert entweder um 1 oder 2 inkrementiert, also abhängig davon, ob ein Befehlsbündel mit einem oder zwei Befehlen gelesen wird. Der Ausgangswert des Addierers 30 wird einem ersten Multiplexer 31 zugeführt. Der erste Multiplexer 31 schaltet entweder das vom Addierer 30 zugeführte Signal oder über einen Br Ctr-Bus 36 zugeführte Signale zum Steuern von Sprüngen und Funktionsaufrufen in einen von zwei Programmzähler 32 und 33. In welchen Programmzähler geschrieben wird, hängt von der über einen Thread-Bus 37 zugeführten Prozeß-Nummer TNr ab. Jedem der beiden aktiven Prozesse ist ein Programmzähler zugeordnet. Wird also beispielsweise ein Befehlsbündel mit zwei Befehlen des Prozesses Nummer 4 aus dem Programmspeicher gelesen, so ist das Signal M gleich 2 und der erste Multiplexer schreibt einen Wert PC0+2 in den Programmzähler PC1 33, der dem Prozeß Nummer 4 zugewiesen ist. Über einen zweiten Multiplexer 34 wird einer der beiden Programmzähler 32 und 33 als Adreßzeiger PC0 ausgegeben. Wiederum steuert die Prozeßnummer, welcher der beiden Programmzähler ausgegeben wird.

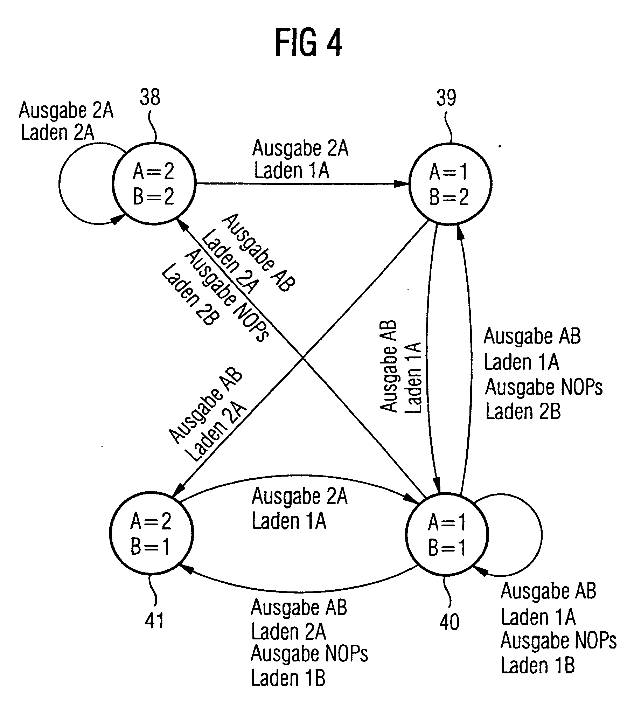

In Figur 4 ist das Zustandsdiagramm der Flow-Control-Unit 10 dargestellt. Die Flow-Control-Unit weist vier verschiedene Zustände 38 bis 41 auf, die sich jeweils durch verschiedene Werte A und B auszeichnen. Die Werte A und B geben an, wieviele Befehle sich noch in dem Befehlspuffer IA 13 bzw. IB 14 befinden. Bei dem dargestellten Zustandsdiagramm ist die Priorität von Prozeß A größer als die Priorität von Prozeß B.

Bei jedem Zustandsübergang ist in dem Diagramm angegeben, welche Aktionen durchgeführt werden, also Ausgabe eines oder zwei der Werte A und/oder B aus den Befehlspuffern IA 13 und/oder IB 14 durch den Instruction-Issue-Selector 15 oder Laden bzw. Nachladen von einen oder zwei Befehlen aus dem Programmspeicher in die Befehlspuffer IA 13 und/oder IB 14. Es können auch NOPs vom Instruction-Issue-Selector 15 ausgegeben werden. 2A und 2B bedeutet, daß zwei Werte aus dem Befehlspuffer IA bzw. IB ausgegeben werden oder in diesen geladen werden, entsprechend bedeutet 1A und 1B die Ausgabe oder das (Nach)Laden nur eines Wertes.

## Patentansprüche

1. Datenverarbeitungseinrichtung zum Verarbeiten von mindestens zwei unabhängigen Prozessen, mit
einem Programmspeicher (12), in dem mindestens ein kompiliertes Programm mit einer Vielzahl N unabhängiger Prozesse abgelegt ist, wobei jeder unabhängige Prozess eine Vielzahl von Befehlen des Prozesses aufweist und die Befehle zu Bündeln von ein oder zwei Befehlen zusammengefasst sind, wobei Befehle eines Bündels zueinander parallel ausführbar sind;
einem ersten Befehlspuffer (13) und einem zweiten Befehlspuffer (14);
einer Programmflusssteuereinheit (10), die ein erstes Bündel eines Prozesses der Vielzahl unabhängiger Prozesse in den ersten Befehlspuffer (13) schreibt und ein zweites Bündel eines anderen Prozesses der Vielzahl unabhängiger Prozesse in den zweiten Befehlspuffer (14) schreibt;
einem ersten Befehlsdekoder (16) und einem zweiten Befehlsdekoder (17);
einer Verzweigungssteuereinheit (11), die den Programmspeicher (12) adressiert;
Register (18) zum Speichern von Flags und Daten, die in Abhängigkeit vom ausgeführten Prozess umgeschaltet werden,
**gekennzeichnet durch**
einen Befehlsausgabeselektor (15), der gesteuert von der Programmflusssteuereinheit (10) entweder jeweils einen Befehl aus den beiden Befehlspuffern (13, 14) ausgibt oder beide Befehle aus dem ersten Befehlspuffer (13) oder dem zweiten Befehlspuffer (14) ausgibt;
und dass dem ersten Befehlsdekoder (16) und dem zweiten Befehlsdekoder (17) die zwei von dem Befehlsausgabeselektor (15) geladenen Befehle zum Dekodieren zugeführt werden.

2. Datenverarbeitungsvorrichtung nach Anspruch 1, **dadurch gekennzeichnet, daß** N Befehlspuffer (13, 14) parallel dem Programmspeicher (12) nachgeschaltet sind und aus diesem ausgelesene Befehle speichern.

3. Datenverarbeitungsvorrichtung nach einem der Ansprüche 1 oder 2, **dadurch gekennzeichnet, daß** ein Befehlsausgabeselektor (15) von der Programmflußsteuereinheit (10) derart gesteuert wird, daß dieser Befehle aus den Befehlspuffern (13, 14) ausliest und N Befehle parallel ausgibt.

4. Datenverarbeitungsvorrichtung nach einem der vorhergehenden Ansprüche, **dadurch gekennzeichnet, daß** N Befehlsdekoder (16, 17) zum Dekodieren der ausgegebenen Befehle vorgesehen sind.

5. Datenverarbeitungsvorrichtung nach einem der vorhergehenden Ansprüche, **dadurch gekennzeichnet, daß** mindestens zwei Befehlsausführungseinheiten (19, 20) zum Ausführen der N dekodierten Befehle vorgesehen ist.

6. Datenverarbeitungsvorrichtung nach einem der vorhergehenden Ansprüche,**dadurch gekennzeichnet, daß** mindestens zwei Busse (21, 22) vorgesehen sind, welche die N Befehlsausführungseinheiten (19, 20) mit einem Speicher (23) für Daten verbinden.

7. Datenverarbeitungsvorrichtung nach einem der vorhergehenden Ansprüche, **dadurch gekennzeichnet, daß** die Befehle eines oder mehrerer Bündel(s) parallel ausführbar sind.

8. Datenverarbeitungsvorrichtung nach einem der vorhergehenden Ansprüche, **dadurch gekennzeichnet, daß** die Verzweigungssteuereinheit (11) einen Adreßzeiger (PC0) ausgibt, der ein Bündel adressiert.

9. Datenverarbeitungsvorrichtung nach einem der vorhergehenden Ansprüche, **dadurch gekennzeichnet, daß** die Verzweigungssteuereinheit (11)
- einen ersten Multiplexer (31) und einen zweiten Multiplexer (34),
- einen Addierer (30) und
- N Programmzähler (32, 33) aufweist, und
- von der Programmflußsteuereinheit (10) die Anzahl (35) der Befehle in einem Bündel dem Addierer (30) zugeführt wird, der einen Adreßzeiger (PC0) und die Anzahl (35) der Befehle addiert,
- Adressen (36) für Programmsprünge oder Funktionsaufrufe und eine Prozeßnummer (37) von der Programflußsteuerung (10) dem ersten Multiplexer (31) zugeführt werden,
- mittels des ersten Multiplexers (31) entweder das Ausgangssignal des Addierers (30) oder die Adressen (36) für Programmsprünge oder Funktionsaufrufe in den dem aktiven Prozeß zugeordneten Programmzähler geschrieben wird bzw. werden,
- über den zweiten Multiplexer (34), der über die zugeführte Prozeßnummer (37) gesteuert wird, der Inhalt des dem gerade aktiven Prozeß zugeordneten Programmzählers (32, 33) als neuer Adreßzeiger (PC0) ausgegeben wird.

10. Datenverarbeitungsvorrichtung nach einem der vorhergehenden Ansprüche, **dadurch gekennzeichnet, daß** der Programmflußsteuereinheit (10) über einen Subbus (25) vom Ausgangsbus (24) des Programmspeichers (12)
- mindestens ein Bit zur Indikation der parallelen Ausführung von Befehlen, und/oder
- mindestens ein Bit zur Indikation der Länge des folgenden Befehlsbündel, und/oder
- die Indikation eines oder mehrerer NOPs in den Befehlsbündeln, und/oder
- die Priorität der Prozesse der Befehle
zugeführt werden.

11. Datenverarbeitungsvorrichtung nach einem der vorhergehenden Ansprüche, **dadurch gekennzeichnet, daß** ein Prozeß durch Zuweisen einer Prozeßnummer, einer Priorität und einer Speicheradresse, ab welcher der Prozeß im Programmspeicher abgelegt ist, aufgerufen wird.

12. Datenverarbeitungsvorrichtung nach einem der vorhergehenden Ansprüche, **dadurch gekennzeichnet, daß** die Datenverarbeitungsvorrichtung als Netzwerkprozessor zum Verarbeiten von Schicht 1 bis 7 Protokoll-Stapeln in Anwendungen wie LAN, ATM-Schaltern, IP-Routern, Frame-Relays, die auf DSL, Ethernet oder Kabel-Modems basieren, dient.

## Claims

1. Data-processing device for processing at least two independent processes, having
a program memory (12) in which at least one compiled program is stored with a multiplicity N of independent processes, each independent process comprising a multiplicity of instructions of the process and the instructions are combined to form bundles of one or two instructions, wherein instructions of one bundle can be executed in parallel with one another;
a first instruction buffer (13) and a second instruction buffer(14);
a program flow control unit (10) which writes a first bundle of a process of the plurality of independent processes into the first instruction buffer (13), and writes a second bundle of another process of the plurality of independent processes into the second instruction buffer (14);
a first instruction decoder (16) and a second instruction decoder (17);
a branching control unit (11) which addresses the program memory (12);
a register (18) for storing flags and data which are switched as a function of the process executed;
**characterized by**
an instruction output selector (15) which outputs in each case, under the control of the program flow control unit (10), either one instruction from the two instruction buffers (13, 14) or outputs both instructions from the first instruction buffer (13) or from the second instruction buffer (14);
and in that the two instructions which are loaded by the instruction output selector (15) are fed to the first instruction decoder (16) and to the second instruction decoder (17) for decoding.

2. Data-processing device according to Claim 1, **characterized in that** N instruction buffers (13, 14) are connected downstream parallel to the program memory (12) and store instructions read out from it.

3. Data-processing device according to one of Claims 1 or 2, **characterized in that** an instruction output selector (15) is controlled by the program flow control unit (10) in such a way that the latter reads out instructions from the instruction buffers (13, 14) and outputs N instructions in parallel.

4. Data-processing device according to one of the preceding claims, **characterized in that** N instruction decoders (16, 17) are provided for decoding the instructions which are output.

5. Data-processing device according to one of the preceding claims, **characterized in that** at least two instruction-execution units (19, 20) are provided for outputting the N decoded instructions.

6. Data-processing device according to one of the preceding claims, **characterized in that** at least two buses (21, 22) are provided which connect the N instruction-execution units (19, 20) to a memory (23) for data.

7. Data-processing device according to one of the preceding claims, **characterized in that** the instructions of one or more bundles can be executed in parallel.

8. Data-processing device according to one of the preceding claims, **characterized in that** the branching control unit (11) outputs an address pointer (PC0) which addresses a bundle.

9. Data-processing device according to one of the preceding claims, **characterized in that** the branching control unit (11) has
- a first multiplexer (31) and a second multiplexer (34),
- an adder (30) and
- N program counters (32, 33), and
- the number (35) of instructions in a bundle are fed from the program flow control unit (10) to the adder (30) which adds an address pointer (PC0) and the number (35) of instructions,
- addresses (36) for program jumps or function calls and a process number (37) are fed from the process flow controller (10) to the first multiplexer (31),
- either the output signal of the adder (30) or the addresses (36) for program jumps or function calls are written by means of the first multiplexer (31) into the program counter assigned to the active process,
- the content of the program counter (32, 33) assigned to the currently active process is output as a new address pointer (PC0) via the second multiplexer (34) which is controlled using the process number (37) supplied.

10. Data-processing device according to one of the preceding claims, **characterized in that** the program flow control unit (10) is provided by the output bus (24) of the program memory (12) via a subbus (25) with
- at least one bit for indicating the parallel execution of instructions, and/or
- at least one bit for indicating the length of the following instruction bundle, and/or
- the indication of one or more NOPs in the instruction bundles, and/or
- the priority of the processes of the instructions.

11. Data-processing device according to one of the preceding claims, **characterized in that** a process is called by assigning a process number, a priority and a memory address starting from which the process is stored in the program memory.

12. Data-processing device according to one of the preceding claims, **characterized in that** the data-processing device serves as a network processor for processing layer 1 to 7 of protocol stacks in applications such as LAN, ATM switches, IP routers or frame relays which are based on DSL, Ethernet or cable modems.

## Revendications

1. Dispositif de traitement de données pour le traitement d'au moins deux processus indépendants, avec
une mémoire de programme (12) dans laquelle est enregistré au moins un programme compilé avec une multiplicité de N processus indépendants, chaque processus indépendant comportant plusieurs instructions du processus et les instructions étant réunies en paquets d'une ou deux instructions, des instructions d'un paquet étant exécutables en parallèle l'une de l'autre ;
une première mémoire tampon d'instructions (13) et une deuxième mémoire tampon d'instructions (14) ;
une unité de commande de flux de programme (10) qui écrit un premier paquet d'un processus de la multiplicité de processus indépendants dans la première mémoire tampon d'instructions (13) et un deuxième paquet d'un autre processus de la multiplicité de processus indépendants dans la deuxième mémoire tampon d'instructions (14) ;
un premier décodeur d'instructions (16) et un deuxième décodeur d'instructions (17) ;
une première unité de commande de branchement (11) qui adresse la mémoire de programme (12) ;
des registres (18) pour la mémorisation de drapeaux et de données qui sont commutés en fonction du processus exécuté ;
**caractérisé par**
un sélecteur de sortie d'instruction (15) qui délivre, commandé par l'unité de commande de flux de programme (10), soit à chaque fois une instruction provenant des deux mémoires tampons d'instructions (13, 14) soit les deux instructions provenant de la première mémoire tampon d'instructions (13) ou de la deuxième mémoire tampon d'instructions (14) ;
et par le fait que les deux instructions chargées par le sélecteur de sortie d'instruction (15) sont envoyées pour le décodage au premier décodeur d'instructions (16) et au deuxième décodeur d'instructions (17).

2. Dispositif de traitement de données selon la revendication 1, **caractérisé par le fait que** N mémoires tampons d'instructions (13, 14) sont branchées en parallèle en aval de la mémoire de programme (12) et mémorisent des instructions lues dans celle-ci.

3. Dispositif de traitement de données selon l'une des revendications 1 ou 2, **caractérisé par le fait qu'**un sélecteur de sortie d'instruction (15) est commandé de telle sorte par une unité de commande de flux de programme (10) qu'il lit des instructions dans les mémoires tampons d'instructions (13, 14) et délivre N instructions en parallèle.

4. Dispositif de traitement de données selon l'une des revendications précédentes, **caractérisé par le fait qu'**il est prévu N décodeurs d'instructions (16, 17) pour le décodage des instructions délivrées.

5. Dispositif de traitement de données selon l'une des revendications précédentes, **caractérisé par le fait qu'**il est prévu au moins deux unités d'exécution d'instructions (19, 20) pour l'exécution des N instructions décodées.

6. Dispositif de traitement de données selon l'une des revendications précédentes, **caractérisé par le fait qu'**il est prévu au moins deux bus (21, 22) qui relient les N unités d'exécution d'instructions (19, 20) à une mémoire (23) pour des données.

7. Dispositif de traitement de données selon l'une des revendications précédentes, **caractérisé par le fait que** les instructions d'un ou plusieurs paquets sont exécutables en parallèle.

8. Dispositif de traitement de données selon l'une des revendications précédentes, **caractérisé par le fait que** l'unité de commande de branchement (11) délivre un pointeur d'adresse (PC0) qui adresse un paquet.

9. Dispositif de traitement de données selon l'une des revendications précédentes, **caractérisé par le fait que** l'unité de commande de branchement (11) comporte
- un premier multiplexeur (31) et un deuxième multiplexeur (34),
- un additionneur (30), et
- N compteurs de programme (32, 33), et que
- le nombre (35) des instructions dans un paquet est envoyé par l'unité de commande de flux de programme (10) à l'additionneur (30) qui additionne un pointeur d'instructions (PC0) et le nombre (35) des instructions,
- des adresses (36) pour des sauts de programme ou des appels de fonction et un numéro de processus (37) sont envoyés par la commande de flux de programme (10) au premier multiplexeur (31),
- au moyen du premier multiplexeur (31), soit le signal de sortie de l'additionneur (30) soit les adresses (36) pour des sauts de programme ou pour des appels de fonction sont écrits dans le compteur de programme associé au processus actif,
- par l'intermédiaire du deuxième multiplexeur (34) qui est commandé par l'intermédiaire du numéro de processus envoyé (37), le contenu du compteur de programme (32, 33) associé au processus justement actif est délivré comme nouveau pointeur d'adresse (PC0).

10. Dispositif de traitement de données selon l'une des revendications précédentes, **caractérisé par le fait que** l'unité de commande de flux de programme (10) reçoit par l'intermédiaire d'un sous-bus (25) du bus de sortie (24) de la mémoire de programme (12)
- au moins un bit pour l'indication de l'exécution parallèle d'instructions, et/ou
- au moins un bit pour l'indication de la longueur du paquet d'instructions suivant, et/ou
- l'indication d'un ou plusieurs NOP dans les paquets d'instructions, et/ou
- la priorité des processus des instructions.

11. Dispositif de traitement de données selon l'une des revendications précédentes, **caractérisé par le fait qu'**un processus est appelé par l'attribution d'un numéro de processus, d'une priorité et d'une adresse de mémoire à partir de laquelle le processus est enregistré dans la mémoire de programme.

12. Dispositif de traitement de données selon l'une des revendications précédentes, **caractérisé par le fait que** le dispositif de traitement de données sert de processeur de réseau pour le traitement de piles de protocole des couches 1 à 7 dans des applications, telles que LAN, commutateurs ATM, routeurs IP, relais de trames, qui sont basées sur DSL, Ethernet ou des modems câblés.
